# EUROPÄISCHE PATENTSCHRIFT

(11) **EP 2 922 677 B1**
(45) Veröffentlichungstag und Bekanntmachung des Hinweises auf die Patenterteilung: **16.05.2018**
(21) Anmeldenummer: 13801492.3
(22) Anmeldetag: 22.11.2013
(51) Int. Cl.: B29C 33/52, B29C 33/38, B29C 39/34, B29C 33/42, B29L 31/00

(54) **REPLIKATIONSMETHODE FÜR OBERFLÄCHENSTRUKTUREN**
REPLICATION METHOD FOR SURFACE STRUCTURES
METHODE DE RÉPLICATION DE STRUCTURES DE SURFACE

(30) Priorität: 23.11.2012 DE 102012221431; 28.05.2013 DE 102013209968
(43) Veröffentlichungstag der Anmeldung: 30.09.2015
(73) Patentinhaber: Rheinische Friedrich-Wilhelms-Universität Bonn, 53113 Bonn (DE)
(72) Erfinder: BARTHLOTT, Wilhelm, 53173 Bonn (DE); BLECKMANN, Horst, 53347 Alfter (DE); HERZOG, Hendrik, 53115 Bonn (DE); KLEIN, Adrian, 53115 Bonn (DE); MAYSER, Matthias, 4000 Lüttich (BE)
(74) Vertreter: dompatent von Kreisler Selting Werner - Partnerschaft von Patent- und Rechtsanwälten mbB
(86) Internationale Anmeldenummer: PCT/EP2013/074460
(87) Internationale Veröffentlichungsnummer: WO 2014/079967

(56) Entgegenhaltungen:
- WO-A1-98/17418
- WO-A2-2007/099141
- US-A1- 2011 215 500

## Beschreibung

Die vorliegende Erfindung betrifft ein Verfahren zur Abformung von Oberflächen.
Abformen ist die Nachbildung körperlicher Gegenstände. Dies kann sowohl mit Hilfe von flüssigen, aber dann erstarrenden Substanzen als Abguss oder mit formbaren, festen Materialien als Abdruck erfolgen. Hierzu sind zahlreiche Verfahren bekannt, beispielsweise aus dem Bereich der Kunst, der Herstellung von Zahnersatz, der Spurensicherung in der Kriminalistik.
Besonders schwierig ist die Abformung, wenn der abzuformende Körper Hinterschneidungen aufweist und insbesondere, wenn diese geschlossene Strukturen umfasst.
Verfahren zur Abformung entsprechender Körper sind beispielsweise Rapid Prototyping und Laser-Lithographie, die aber langsam und teuer sind und damit für eine Massenproduktion nicht geeignet sind.
Eine Alternative ist eine Abformung mit einer sogenannten verlorenen Maske, bei der die Form zerstört wird, beispielsweise durch Brennen des Modells. Auch dieses Verfahren ist aufgrund der fehlenden Wiederverwendbarkeit der Maske aufwändig und für die Massenproduktion ungeeignet.
WO 98/17418 beschreibt ein Verfahren zur Herstellung einer keramischen Form unter Verwendung eines Gels.
WO 2007/099141 beschreibt unbenetzbare Oberflächen, die Filamente aufweisen.
Aufgabe der vorliegenden Erfindung war es, ein Abformungsverfahren bereitzustellen, das sich für geschlossene Hinterschneidungen eignet.
Gelöst wird die Aufgabe durch ein Verfahren zur Abformung von Oberflächen mit geschlossenen Hinterschneidungen umfassend die Schritte:
- Bereitstellen einer Oberfläche mit geschlossenen Hinterschneidungen
- Inkontaktbringen mit einer Abgussmasse, die gelbildend ist
- Trennen der Oberfläche von der Abgussmasse während oder nach der Gelbildung, um eine Form zu erhalten.

Bei dem erfindungsgemäßen Verfahren lassen sich beispielsweise Oberflächen abformen, bei denen die geschlossenen Hinterschneidungen in einem Größenbereich von etwa 100 bis 6000 µm, insbesondere 300 bis 3000 µm liegen.

Erfindungsgemäß wird die Oberfläche mit einer Abgussmasse in Kontakt gebracht, die gelbildend wirkt, d.h. zunächst eine geringe Viskosität aufweist, um fließen zu können, und dann in einem elastischen Zustand erstarrt. Wenn die Abgussmassen nach oder während der Gelbildung von der Oberfläche entfernt wird, werden zunächst die Gelstrukturen geöffnet, adhärieren oder vernetzen jedoch wieder miteinander, sodass eine Form erhalten wird.

Die erstarrende Abgussmasse wird also von der abgeformten Struktur durchschnitten; diese selbst bleibt unbeschädigt.

Abgussmassen, die im fließfähigen Zustand eine Viskosität im Bereich von 0,3 bis 10⁶ mPa·s aufweisen, haben sich als geeignet erwiesen. Bevorzugt wird eine Viskosität im Bereich von 0,3 bis 100 mPa·s eingesetzt.

Für viele Substanzen ist es möglich, die Viskosität durch Temperaturerhöhung stark zu erniedrigen, so dass in einer Ausführungsform die Abgussmasse bei einer erhöhten Temperatur in Kontakt mit der Oberfläche gebracht wird. Geeignete Temperaturen sind beispielsweise 5 bis 200°C, wobei Temperaturen im Bereich von 50 bis 90°C bevorzugt sind.

Der Temperaturbereich, in dem die Abgussmasse eingesetzt wird, hängt von der Abgussmasse ab; die Temperatur muss so gewählt sein, dass die Abgussmasse hinreichend niederviskos ist, um die Bereiche der abzuformenden Oberfläche ausfüllen zu können.

Bevorzugt bildet die Abgussmasse durch Temperaturerniedrigung ein Gel. Alternativ kann die Gelbildung aber auch durch andere Mechanismen, beispielsweise chemische Reaktionen, Licht, etc. erfolgen.

Als Abgussmassen haben sich insbesondere Hydrogele und Thermoplaste als geeignet erweisen, wobei beispielsweise Agar, Gelatine, Wachse oder Polyethylenglykole besonders geeignet sind.

Mit diesen Verfahrensschritten ist eine Form entstanden, die eine Negativform der Oberfläche darstellt. Um zu einer Replikation der Oberflächenstruktur zu kommen, ist es erforderlich, die so erzeugte Form mit einer aushärtbaren Masse auszugießen, diese auszuhärten und dann die ausgehärtete Masse von der Form zu trennen. Aufgrund der geschlossenen Hinterschneidungen umschließt die aushärtbaren Massen in diesem Bereich die Form. In einigen Ausführungsformen werden beim Trennen der ausgehärteten Masse von der Form werden die entsprechenden Strukturen der Form wieder aufgebrochen, schließen sich jedoch anschließend wieder und adhärieren.

In anderen Ausführungsformen wird eine sogenannte verlorene Form eingesetzt, d.h. die Form wird mit einer aushärtbaren Masse ausgegossen und die Form durch Zerstörung entfernt. Bei einer reversibel temperaturabhängig gelierenden Form kann dies beispielsweise durch Wiedererwärmen erfolgen. Grundsätzlich kann das Formmaterial dann auch wiederverwendet werden.

Hinsichtlich der Viskosität der aushärtbaren Masse sind prinzipiell Viskositäten im Bereich von 0,3 bis 10⁶ mPa·s geeignet, wobei Viskositäten im Bereich von 0,3 bis 100 mPa·s besonders bevorzugt sind.

In einigen Ausführungsformen kann es sinnvoll sein, dass Einbringen der Abgussmasse oder der aushärtbaren Masse durch Druck zu unterstützen. So könnte beispielsweise ein Überdruck benutzt werden, um das Einbringen der Abgussmasse zu beschleunigen. Beim Ausgießen der Form mit einer aushärtbaren Masse könnte beispielsweise mit einem Unterdruck gearbeitet werden. Die Anwendung von Unterdruck hat den Vorteil, dass eventuell vorhandene Lufteinschlüsse mit entfernt werden.

Das erfindungsgemäße Verfahren ist insbesondere anwendbar zur Abformung von komplexen, biologischen Strukturen, z.B. von Schneebesenhaaren der Salvinia.

Die vorliegende Erfindung wird durch das nachfolgende Beispiel weiter erläutert.

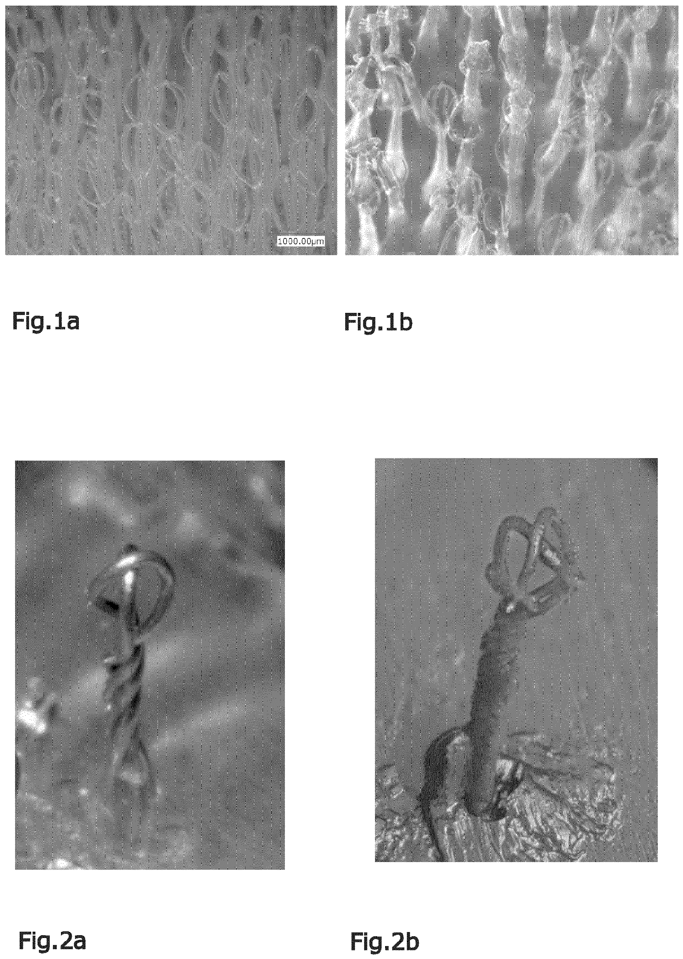

Figur 1a zeigt eine mikroskopische Aufnahme von Salvinia molesta; Figur 1b eine entsprechende Aufnahme von der mit dem erfindungsgemäßen Verfahren erstellten Silikonreplik.
Figuren 2a und 2b zeigen ein Metallmodell eines Haares von Salvinia molesta und dessen Abformung (2a: Modell, 2b: Replik).

### Replizierung von Krönchen von Salvinia molesta

Agar wird in einer Menge von 3,6 g/100 ml Wasser angerührt und gekocht. Nachdem die Agar-Lösung keine Flocken mehr aufweist, wird das Agar bei über 50°C über *Salvinia molesta* gegossen oder alternativ *Salvinia molesta* in den flüssigen Agar hineingefahren. Die Agar-Lösung wird gekühlt und wird bei 30 bis 45°C gelbildend. Bei einer Temperatur von 26 bis 29°C wird die Salvinia Struktur aus dem Agar gezogen. Die geschlossenen Strukturen der *Salvinia molesta* schneiden sich durch die Agar-Schicht. Die Schnittkanten im Agar verbinden sich wieder, so dass erneut eine geschlossene Form entsteht.

Eventuell verbleibende Flüssigkeit in der Agar-Form wird entfernt, beispielsweise durch Verdunstung, gegebenenfalls unterstützt durch Anlegen von leichtem Unterdruck.

Anschließend wird mit Silikon oder Epoxidharz ausgegossen. Nach dem Ausgießen, aber vor der Aushärtung wird ein Vakuum angelegt, um eingeschlossen Gase zu entfernen. In Abhängigkeit vom verwendeten Härtungsmittel erfolgt die Aushärtung bei Raumtemperatur oder bei leichter Erwärmung bzw. bei UV-härtenden Materialien durch UV-Licht.

Anschließend wurde die ausgehärtete Masse von der Form getrennt, in dem die Form durch Temperatur verflüssigt wurde (Erwärmen im Wasserbad). Sie war eine Replikation der Strukturen von *Salvinia molesta.*

## Patentansprüche

1. Verfahren zur Abformung von Oberflächen mit geschlossenen Hinterschneidungen umfassend die Schritte:
- Bereitstellen einer Oberfläche mit geschlossenen Hinterschneidungen
- Inkontaktbringen mit einer Abgussmasse, die gelbildend ist
- Trennen der Oberfläche von der Abgussmasse während oder nach der Gelbildung, um eine Form zu erhalten.

2. Verfahren nach Anspruch 1, wobei die Oberflächen geschlossene Hinterschneidungen im Größenbereich von 100 bis 6000 µm aufweist.

3. Verfahren nach Anspruch 1 oder 2, wobei die Abgussmasse eine Viskosität von 0,3 bis 10⁶ mPa·s aufweist.

4. Verfahren nach einem der Ansprüche 1 bis 3, wobei die Abgussmasse durch Temperaturerniedrigung ein Gel bildet.

5. Verfahren nach Anspruch 4, wobei die Abgussmasse bei einer Temperatur von 5 bis 200°C mit der Oberfläche in Kontakt gebracht wird.

6. Verfahren nach einem der Ansprüche 1 bis 5, wobei die Abgussmasse ausgewählt wird aus Hydrogelen, Thermoplasten, Agar, Geleatine, Wachs, Polyethylenglykole.

7. Verfahren zur Replikation einer Oberfläche, umfassend die Schritte
- Abformung einer Oberfläche durch das Verfahren nach einem der Ansprüche 1 bis 6
- Ausgießen der Form mit einer aushärtbaren Masse
- Aushärten der Masse
- Trennen der ausgehärteten Masse von der Form.

8. Verfahren nach Anspruch 7, wobei zum Trennen der ausgehärteten Masse von der Form die Form zerstört wird.

9. Verfahren nach Anspruch 7 oder 8, wobei die aushärtbare Masse ausgewählt wird aus Duroplasten und Elastomeren, insbesondere Silikonmaterialien, Kautschuk, Epoxidharz.

10. Form, erhältlich durch das Verfahren nach einem der Ansprüche 1 bis 6.

11. Replik, erhältlich durch das Verfahren nach einem der Ansprüche 7 bis 9.

## Claims

1. A process for molding surfaces with closed undercuts, comprising the steps of:
- providing a surface having closed undercuts;
- contacting said surface with a casting composition that is gel-forming;
- separating the surface from the casting composition during or after the gel formation to obtain a mold.

2. The process according to claim 1, wherein said surfaces have closed undercuts on a scale of from 100 to 6000 µm.

3. The process according to claim 1 or 2, wherein said casting composition has a viscosity of from 0.3 to 10⁶ mPa·s.

4. The process according to any of claims 1 to 3, wherein said casting composition forms a gel by temperature reduction.

5. The process according to claim 4, wherein said casting composition is contacted with the surface at a temperature of from 5 to 200°C.

6. The process according to any of claims 1 to 5, wherein said casting composition is selected from hydrogels, thermoplasts, agar, gelatin, wax, polyethylene glycols.

7. A process for replicating a surface, comprising the steps of:
- molding a surface by the process according to any of claims 1 to 6;
- casting the mold with a curable composition;
- curing the composition;
- separating the cured composition from the mold.

8. The process according to claim 7, wherein the mold is destroyed while it is separated from the cured composition.

9. The process according to claim 7 or 8, wherein said curable composition is selected from thermosetting plastics and elastomers, especially silicone materials, rubber, epoxy resin.

10. A mold obtainable by the process according to any of claims 1 to 6.

11. A replica obtainable by the process according to any of claims 7 to 9.

## Revendications

1. Procédé destiné à la prise d'empreinte de surfaces ayant des contre-dépouilles fermées, comprenant les étapes de:
- fourniture d'une surface ayant des contre-dépouilles fermées
- mise en contact avec une masse de moulage qui est gélifiante
- séparation de la surface par rapport à la masse de moulage pendant ou après la gélification pour obtenir un moule.

2. Procédé selon la revendication 1, dans lequel les surfaces présentent des contre-dépouilles fermées dans la plage de dimension de 100 à 6 000 µm.

3. Procédé selon la revendication 1 ou 2, dans lequel la masse de moulage présente une viscosité de 0,3 à 10⁶ mPa·s.

4. Procédé selon l'une des revendications 1 à 3, dans lequel la masse de moulage forme un gel par abaissement de la température.

5. Procédé selon la revendication 4, dans lequel la masse de moulage est mise en contact avec la surface à une température de 5 à 200 °C.

6. Procédé selon l'une des revendications 1 à 5, dans lequel la masse de moulage est sélectionnée parmi des hydrogels, des thermoplastiques, l'agar, la gélatine, la cire, des polyéthylènes glycol.

7. Procédé destiné à la réplication d'une surface, comprenant les étapes de:
- prise d'empreinte d'une surface par le procédé selon l'une des revendications 1 à 6
- versement d'une masse durcissable dans le moule
- durcissement de la masse
- séparation de la masse durcie par rapport au moule.

8. Procédé selon la revendication 7, dans lequel le moule est détruit pour séparer la masse durcie et le moule.

9. Procédé selon la revendication 7 ou 8, dans lequel la masse durcissable est sélectionnée parmi les thermodurcissables et les élastomères, en particulier des matières silicone, du caoutchouc, de la résine époxyde.

10. Moule, pouvant être obtenu par le procédé selon l'une des revendications 1 à 6.

11. Réplique, pouvant être obtenue par le procédé selon l'une des revendications 7 à 9.
